# EUROPEAN PATENT SPECIFICATION

(11) **EP 4 289 651 B1**
(45) Date of publication and mention of the grant of the patent: **18.11.2026**
(21) Application number: 23177496.9
(22) Date of filing: 06.06.2023
(51) Int. Cl.: B60K 35/23, B60K 35/28, B60K 35/60, B60K 37/00, G02B 27/01

(54) **MOTOR VEHICLE**
KRAFTFAHRZEUG
VÉHICULE AUTOMOBILE

(30) Priority: 08.06.2022 IT 202200012155
(43) Date of publication of application: 13.12.2023
(73) Proprietor: FERRARI S.p.A., 41100 Modena (IT)
(72) Inventor: TANZI, Alessandro, 41100 MODENA (IT); MASOERO, Erik, 41100 MODENA (IT); VITIELLO, Pasquale, 41100 MODENA (IT)
(74) Representative: Studio Torta S.p.A.

(56) References cited:
- WO-A1-2020/235675
- FR-A3- 2 984 533
- JP-A- H08 175 225
- US-A1- 2006 028 733
- US-A1- 2013 141 250
- US-A1- 2021 316 611

## Description

### CROSS-REFERENCE TO RELATED APPLICATIONS

This patent application claims priority from Italian patent application no. 102022000012155 filed on June 8, 2022.

### TECHNICAL FIELD

The present invention relates to a motor vehicle.

### BACKGROUND

Motor vehicles comprising a body defining a passenger compartment and a power unit are known.

The passenger compartment in turn comprises at least one pair of front seats and is delimited frontally by a dashboard and by a windshield which are arranged frontally at the front seats, with reference to a normal forward moving direction of the motor vehicle.

In a known manner, one of the front seats defines a driver's seat.

The dashboard comprises, in a known manner, an instrument panel arranged in a frontal position to the driver's seat and envisaged to provide the driver himself with information necessary for driving.

In greater detail, the instrument panel comprises, for example, a tachymeter indicating the instantaneous speed of the motor vehicle and a rev counter indicating the number of revolutions of a drive shaft of the power unit.

The instrument panel also comprises, in some embodiments, an indication of the residual amount of fuel, an indication of the temperature of a cooling liquid of the power unit, a clock and an odometer.

The dashboard comprises, in turn, a central portion housing a central display distinct from the instrument panel and adapted to display to the occupants accessory information not necessary for driving, such as for example information provided by the satellite navigator, information relating to connectivity and to the use of a mobile phone or information relating to the reproduction of audiovisual content within the passenger compartment.

The motor vehicles comprise, in a known manner, a supplementary head-up display.

The head-up display of known type is adapted to display supplementary virtual images representative of quantities characteristic of the state of the motor vehicle itself.

More precisely, optical systems are known from the geometric optics, such as for example the human eye capable of forming a real or virtual image representative of an object.

More in particular, the objects emit or diffuse a beam of light in all directions.

The optical system is formed by a plurality of reflecting and reflective surfaces capable of deflecting the rays of the beam of light coming from a point of the object in a point of the real or virtual image.

In doing so, the optical system determines an association between each point of the object and a corresponding point of the real or virtual image.

Each point of the object, in particular, emits a divergent beam of light from the object point itself.

The optical system alters the divergent beam of light from the object point in another beam which may be convergent or divergent.

When the rays emerging from the optical system associated with each point of the object actually intersect at the corresponding point in the image, the optical system provides a real image of the object.

Otherwise, when the prolongations of the rays emerging from the optical system associated with each point of the object intersect at the point of the image, the optical system provides a virtual image of the object.

The head-up displays of known type comprise, in turn:
- a processing unit;
- a projection unit controlled by the processing unit and adapted to generate a light beam; and
- a plurality of mirrors arranged so as to reflect the light beam onto a windshield.

The windshield deflects the light beam.

The mirrors and the windshield form, in the solutions of known type, an optical system configured to form the virtual image externally to the windshield and at a not null distance from the windshield itself.

There is a perceived need in the sector to reduce or even eliminate the central display, while ensuring that the aforementioned accessory information is made available to the occupants of the motor vehicle.

There is furthermore a perceived need in the sector to make such accessory information available at all points in the passenger compartment without parallax effects.

There is also a perceived need in the sector to make such accessory information available only when it is actually necessary.

There is also a perceived need in the sector to allow the occupants of the motor vehicle to select the aforesaid information to be displayed.

There is also a perceived need in the sector to obtain maximum flexibility in the design of the geometric shapes of the central portion of the dashboard.

With particular reference to the high-end motor vehicles intended for both a conventional urban/suburban use and racing use on a track, there is furthermore a perceived need in the sector to make available to the occupants of the motor vehicle dedicated accessory information depending on the use of the motor vehicle itself.

Finally, there is also a perceived need in the sector to make this accessory information available to the occupants of the motor vehicle, even when the latter wear polarized glasses.

JP-A-H08175225 discloses a motor vehicle according to the preamble of claim 1.

US-A-2013/141250 discloses a method to dynamically register a graphic on a driving scene of a source vehicle utilizing a graphic projection display includes monitoring source vehicle information and monitoring road information. A preferred driving maneuver and a driving scene location of the preferred driving maneuver are identified based on the monitored source vehicle information and the monitored road information. A graphic exemplifying the preferred driving maneuver is determined and a location of the graphic is dynamically registering upon the graphic projection display corresponding to the driving scene. The dynamically registered location is based on the driving scene location of the preferred driving maneuver. The graphic is displayed upon the graphic projection display.

US-A-2021/316611 discloses a display surface of a self-luminous screen element is divided into first and second display regions by a bend region. A selective shielding unit transmits light from the screen element along a preferred direction and blocks light along a blocking direction and/or deflects light from the blocking direction. When installed in a motor vehicle, the display device faces a surface region at a distance from the screen element on which a reflection of the display content displayed on the second display region is visible from a predetermined viewing point. In this case, the preferred direction of the selective shielding unit in the second display region is oriented toward the surface region and the blocking direction in the second display region is oriented toward the predetermined viewing point.

WO-A-2020/235675 discloses a head-up display device provided with: a projector, which projects light of a display image; a light guiding part which guides the light of the display image from the projector to a projection member; a housing in which an opening is formed, and which houses the projector and the light guiding part, and guides the light of the display image guided through the opening by the light guiding part to the projection member; and a bezel member which includes a bezel polarizing plate disposed on an optical path between the light guiding part and the projection member and having a polarization function, and suppresses the entry of dust into the housing from the opening. The bezel polarizing plate is configured such that the brightness of a p wave of the light of the display image is made higher after than before the light is transmitted through the bezel polarizing plate by polarization.

FR-A-2984533 discloses a head-up display with a projection unit for generating images by image sources, and converging elements for transforming the images, so as to create virtual images for display in a spatial area through a partially reflective medium. Each image source is mounted on an opposite side of one of front seats with respect to a main axis of a car, where the virtual images are reflected on the same reflective medium placed in a reflective area and transverse to the main axis of the car.

US-A-2006/028733 discloses a plate-shaped display device is partitioned into a meter display area and a HUD display area. Images displayed on the display device are visible on both front and rear surfaces of the display device. A direct image displayed on the meter display area is projected toward an eye range of a vehicle driver. A reflected image displayed on the HUD display area is firstly projected in a direction opposite to the eye range. Then, the reflected image is reflected at a magnifying mirror and a windshield, then finally projected toward the eye range.

### SUMMARY

Aim of the present invention is the realization of a motor vehicle, which allows to fulfil at least one of the aforementioned needs.

The above aim is achieved by the present invention, as it relates to a motor vehicle according to what is defined by Claim 1.

### BRIEF DESCRIPTION OF THE DRAWINGS

For a better understanding of the present invention, two preferred embodiments are described below, by way of non-limiting example only and with reference to the accompanying drawings, wherein:
- Figure 1 is a perspective view of a motor vehicle realized according to the dictates of the present invention;
- Figure 2 is a view of a front portion of a passenger compartment of the motor vehicle of Figure 1, in a first operating position and with parts removed for clarity's sake; and
- Figure 3 shows the front portion of Figure 2, in a second operating position and with parts removed for clarity's sake.

### DESCRIPTION OF EMBODIMENTS

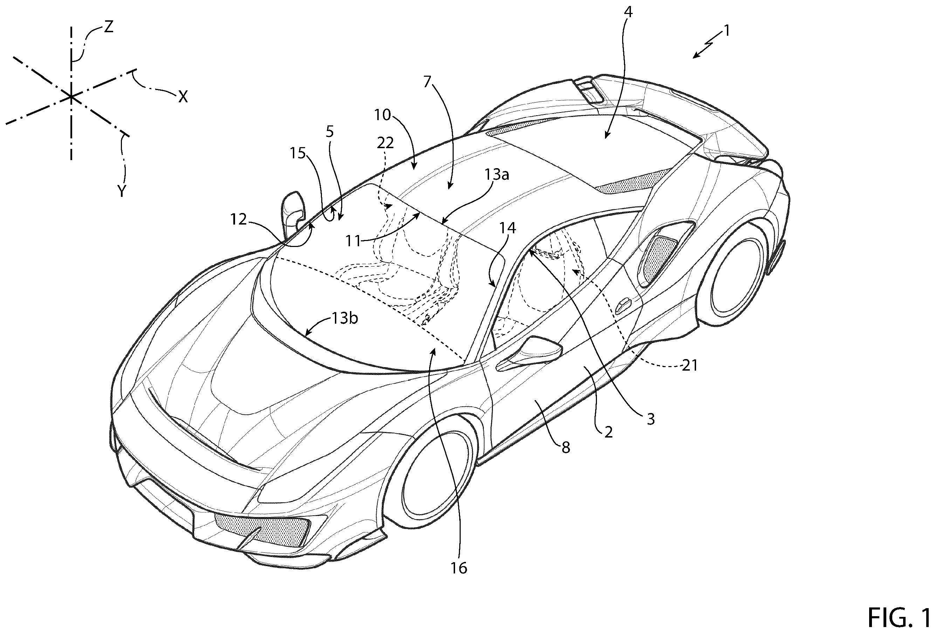

With reference to Figure 1, 1 denotes a motor vehicle comprising a body 2 defining a passenger compartment 3 and a power unit 4 (only schematically shown in Figure 1).

The motor vehicle 1 is a high-end motor vehicle intended for both a conventional urban/suburban use and racing use on a track.

It should be noted that in the remainder of this description, expressions such as "above", "below", "at the front", "at the back" and the like are used with reference to conditions of normal forward moving direction of the motor vehicle 1.

The motor vehicle 1 further comprises:
- a windshield 5 delimiting the passenger compartment 3 at the front;
- a backrest (not shown) delimiting the passenger compartment 3 at the back;
- a roof 7 delimiting the passenger compartment 3 above; and
- a pair of doors 8 hinged to the body 2 and movable between a closed position in which they delimit the passenger compartment 3 laterally and prevent the entry into/exit from the passenger compartment 3 and an open position in which they allow the entry into/exit from the passenger compartment 3.

It is also possible to define:
- a longitudinal axis X integral with the motor vehicle 1, arranged, in use, horizontal and parallel to a normal forward moving direction of the motor vehicle 1;
- a transverse axis Y integral with the motor vehicle 1, arranged, in use, horizontal and orthogonal to the axis X; and
- an axis Z integral with the motor vehicle 1 arranged, in use, vertical and orthogonal to the axes X, Y.

In greater detail, the windshield 5 comprises, in turn:
- a chassis 10 comprising a frame 11 defining an opening 12; and
- a front glazing 16 engaging the opening 12, supported by the frame 11 and arranged frontally with respect to a normal forward moving direction parallel to the direction X.

In greater detail, the frame 11 is quadrangular in shape and comprises:
- a pair of upper and lower cross members 13a, 13b opposite each other; and
- a pair of lateral pillars 14, 15, opposite each other and extending transversely between respective ends of the cross members 13a, 13b.

The cross members 13a, 13b have a prevalent extension parallel to the axis Y.

The cross member 13a is arranged rearwardly to the cross member 13b.

The motor vehicle 1 further comprises:
- a pair of front seats 21, 22 housed in the passenger compartment 3; and
- a dashboard 25 arranged below the windshield 5 and frontally at the seats 21, 22.

In particular, the seat 21 defines a driver's seat and the motor vehicle 1 comprises a steering wheel 24 protruding from the dashboard 25 towards the seat 21.

The dashboard 25 comprises an end region contiguous to the glazing 16 and known in the art as "valence panel".

The region 26 is, in the shown case, curved.

The motor vehicle 1 further comprises a head-up display 30 configured to display a plurality of virtual images 29, 51, 52 on a region 19.

The term "virtual images" refers to images whose points correspond to the prolongation of the light rays generated by the head-up display 30.

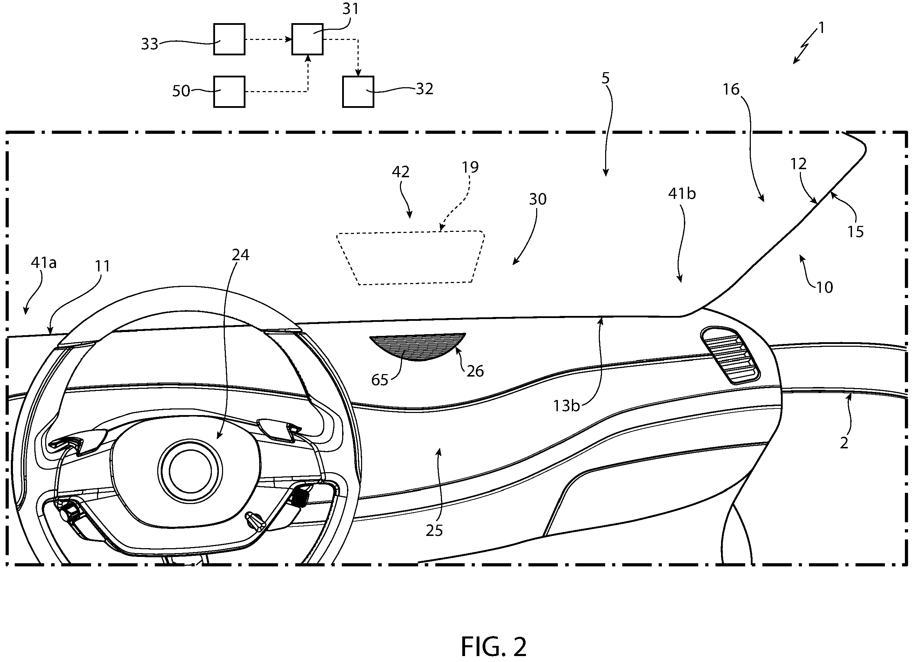

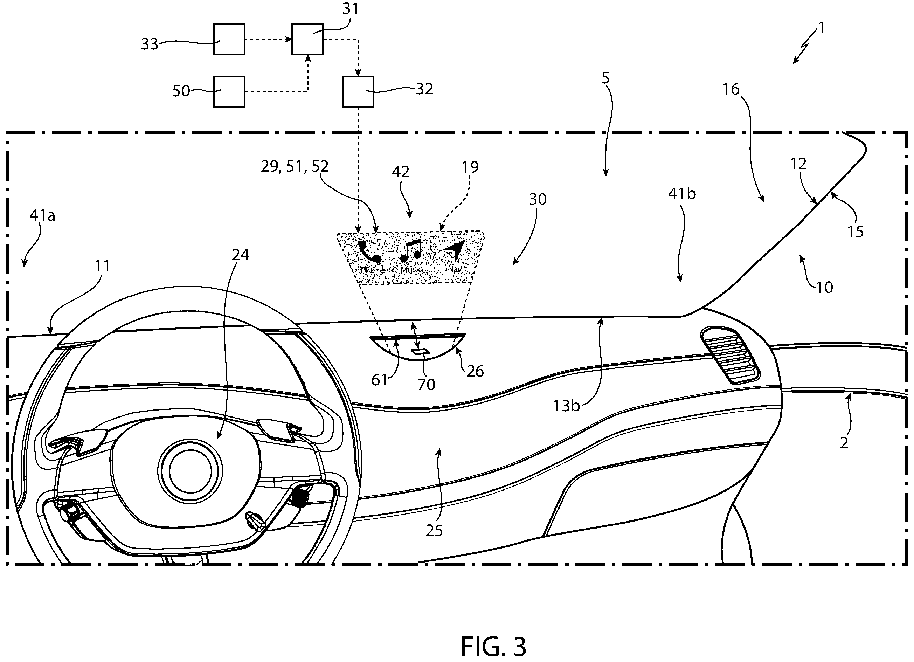

The head-up display 30 comprises a projection unit 32 housed in a region 26 of the dashboard 25 and the region 19 is defined by the windshield 5 (Figures 2 and 3).

In other words, the head-up display 30 forms the images 29, 51, 52 on the region 19 of the windshield 5 itself and, so, the images 29, 51 are located at null distance from the windshield 5 itself.

In particular, the images 29, 51, 52 are not simply reflected from the region 19, but are formed on the region 19 itself, i.e. they are focused exactly on the region 19 of the windshield 5.

The projection unit 32 is optically facing the region 19 and is adapted to project a light beam onto the windshield 5.

The region 19 is transparent.

With reference to Figures 2 and 3, the head-up display 30 further comprises:
- a processing unit 31 programmed to control the projection unit 32; and
- a control device 33 (only schematically shown), for example a knob or a voice receiver, operatively connected with the processing unit 31, and selectively operable to activate/deactivate the projection unit 32.

In greater detail, the processing unit 31 is programmed to cause the projection unit 32 to form the images 29, 51, 52 having characteristics selectable both on the basis of the preferences of the occupants of the motor vehicle 1 and on the basis of the use on the road or on the track of the motor vehicle 1.

The head-up display 30 further comprises a polarized film 60 applied on the projection unit 32.

The film 60 allows, in particular, the display of the images 29, 51, 52 even wearing polarized glasses.

The dashboard 25 extends between the pillars 14, 15.

Preferably, the region 26 is arranged in a median region of the dashboard 25 equidistant from the pillars 14, 15.

In a preferred embodiment, the dashboard 25 defines a compartment 70 for housing the projection unit 32.

The dashboard 25 further comprises a covering element 65 selectively movable, following the actuation of the control device 33, between:
- a first position (Figure 2), in which it is extracted from a seat 61 of the dashboard 25 itself and completely covers the compartment 70 so as to be interposed between the projection unit 32 and the region 19 of the windshield 5; and
- a second position (Figure 3), in which it is housed within a seat 61 of the dashboard 25 itself and leaves the compartment 70 uncovered so as to leave the projection unit 32 facing the region 19 of the windshield 5.

The processing unit 32 is programmed to cause the movement of the covering element 65 between the aforesaid first and second positions, following the actuation of the control device 33.

In particular, the covering element 65 is slidable between the aforesaid first and second positions.

The compartment 70 is arranged below the region 26.

The glazing 16 comprises, in turn:
- a pair of lateral areas 41a, 41b each adjacent to a relative pillar 14, 15; and
- a central area 42 interposed between the areas 41a, 41b and defining the region 26.

In particular, the area 41a is arranged frontally at the seat 11 and the area 41b frontally at the seat 12.

The images 29, 51, 52 relate to accessory information distinct from the aforesaid information which is not necessary for driving.

For example, the images 29 relate to information provided by the satellite navigator, information relating to connectivity and to the use of a mobile phone or information relating to the reproduction of audiovisual content within the passenger compartment.

The processing unit 31 is programmed to place the covering element 65 in the second position and to control the projection of the images 29 in case of activation request by the occupants of the motor vehicle 1.

The processing unit 31 is programmed, both during an urban/suburban use of the motor vehicle 1 and during use of the motor vehicle 1 on the track, to place the covering element 65 in the first position and deactivate the projection unit 32, in case of deactivation request by the occupants of the motor vehicle 1.

The processing unit 31 is also programmed, during use of the motor vehicle 1 on the road, to cause the projection group 32 to form on the region 19 a plurality of virtual images 51 representative of the surroundings of the car 1.

In a preferred embodiment, the motor vehicle 1 comprises a pair of cameras 50 (only schematically shown in Figures 2 and 3) adapted to acquire images representative of the scenario surrounding laterally and posteriorly the motor vehicle 1 itself.

In such a preferred embodiment, the processing unit 31 is programmed to receive from the camera 50 a signal representative of the surroundings of the car 1, and to cause the projection unit 32 to form the images 51 on the region 19 of the windshield 5.

Preferably, the processing unit 31 is programmed to cause the projection unit 32 to project, during use of the motor vehicle 1 on the track, further images 52 on the region 19 of the windshield 5.

In a non-limiting manner, the images 52 may relate to information exchanged with the box and/or to information exchanged with the racing management and/or to information exchanged with a copilot located in a remote position from the motor vehicle 1.

The images 52 may further be related to information relating to the track, such as for example time history, path statistics, etc.

The operation of the motor vehicle 1 is firstly described with reference to an urban/suburban use and to a condition in which the covering element 65 is in the first position (Figure 3). The covering element 65 is further extracted from the seat 61 and covers the compartment 70 so as to be interposed between the projection unit 32 and the region 19 of the windshield 5.

The crew activates the head-up display 30 via the control device 33.

The head-up display 30 forms the images 29, 51 on the region 19 of the windshield 5.

By means of the control device 33, it is also possible to select the nature and the characteristics of the information represented by means of the images 29, 51, on the basis of the preferences of the occupants of the motor vehicle 1.

Consequently, the covering element 65 slides until reaching the second position (Figure 2) in which it is housed within a seat 61 of the dashboard 25 itself and leaves the compartment 70 uncovered so as to leave the projection unit 32 of the head-up display 30 facing the region 19 of the windshield 5.

The images 29 relate to accessory information not necessary for driving, such as for example information provided by the satellite navigator, information relating to connectivity and to the use of a mobile phone or information relating to the reproduction of audiovisual content within the passenger compartment.

The crew and in particular the driver have visual access to these images 29 without looking away from the windshield 5.

In a preferred embodiment, the head-up display 30 is operable to project onto the region 19 the images 51 corresponding to the images acquired by the cameras 50 and representative of the scenario surrounding laterally and posteriorly the motor vehicle 1 itself.

With reference to the use of the motor vehicle 1 on the track, following the actuation of the control device 33, the head-up display 30 forms further images 52 on the region 19 of the windshield 5.

In a non-limiting manner, the images 52 may relate to information exchanged with the box and/or to information exchanged with the racing management and/or to information exchanged with a copilot located in a remote position from the motor vehicle 1.

The images 52 may further be related to information relating to the track, such as for example time history, path statistics, etc.

The crew deactivates the head-up display 30 via the control device 33.

Following such deactivation, the covering element 65 returns from the second position (Figure 2) to the first position (Figure 3).

From an examination of the present invention, the advantages that it allows to be obtained are evident.

In greater detail, the projector 32 is housed in the region 26 of the dashboard 25, and the region 19 is defined by the windshield 5.

In this way, it is possible on the one hand to reduce or even completely eliminate the central display from the dashboard 25, providing on the other hand the accessory information not necessary for driving by means of the images 29, 51, 52 projected onto the region 19 of the windshield 5.

It is thus possible to increase the freedom of the designer in the conception of the geometries and of the dimensions of the dashboard 25, without penalizing the driving comfort.

Moreover, the aforementioned information on the state of the motor vehicle 1 is made available to the crew only following the activation of the control device 33, i.e. only when it is actually necessary for safe driving.

Thanks to the fact that the images 29, 51 are formed on the region 19 of the windshield 5, the driver can acquire the respective information substantially without looking away from the windshield 5 itself and with a limited risk of distraction that could cause accidents.

Moreover, the images 29, 51, 52 are virtual images that are formed on the windshield 5. Therefore, the images 29, 51, 52 are correctly perceived from any point of the motor vehicle 1, without any parallax effect.

The nature and the characteristics of the information represented by the images 29, 51, 52 can be selected by appropriately programming the processing unit 31, thus allowing such information to be personalized both on the basis of the preferences of the occupants of the motor vehicle 1 and on the basis of the use on the road or on the track of the motor vehicle 1.

The film 60 allows the correct display of the images 29, 51, 52 to the occupants of the motor vehicle 1, even when the latter wear polarized glasses.

Finally, it is clear that modifications and variations can be made to the motor vehicle 1 made according to the present invention, which however do not fall outside the scope of protection defined by the Claims.

In particular, the projection unit 32 could comprise a light-emitting diode display or a liquid crystal display placed in its focus.

The dashboard 25 could comprise an instrument panel arranged frontally at the seat 21 and at the front of the steering wheel 24.

The instrument panel would be envisaged to make available to the driver the information necessary for driving, such as the instantaneous speed of the motor vehicle and a rev counter indicating the number of revolutions of a drive shaft of the power unit.

The dashboard 25 could not comprise the covering element 65.

## Claims

1. A motor vehicle (1) comprising:
- a passenger compartment (3);
- a dashboard (25) arranged within said passenger compartment (3) and delimiting said passenger compartment (3) at the front with reference to a normal forward moving direction of said motor vehicle (1);
- a windshield (5) delimiting said passenger compartment (3) and contiguous with said dashboard (25); and
- a head-up display (30) configured to form at least one first virtual image (29, 51, 52) containing an item of information accessory to the driving of said motor vehicle (1) on a first region (19);
said head-up display (30) comprising a projection unit (32) housed in a second region (26) of said dashboard (25);
**characterized in that** said first region (19) is defined by said windshield (5);
said head-up display (30) forming said first virtual image (29, 51, 52) on said first region (19) of said windshield (5); said first virtual image (29, 51) being located at null distance from said windshield (5).

2. The motor vehicle according to Claim 1, **characterized in that** said head-up display (30) further comprises a polarized film (60) applied on said projection unit (32).

3. The motor vehicle according to Claim 1 or 2, **characterized in that** said second region (26) defines a compartment (70) of said dashboard (25).

4. The motor vehicle according to Claim 3, **characterized in that** said passenger compartment (3) comprises a plurality of pillars (14, 15) spaced apart from one another, between which said windshield (5) extends;
said windshield (5) comprising, in turn:
- a central area (42) defining said first region (19) and capable of facing said projector (32); and
- a first and a second end area (41a, 41b) opposite one another and delimited by respective segments of corresponding pillars (14, 15);
one (11) of said seats (11, 12) defining a driver's seat arranged on the side of said first area (41a).

5. The motor vehicle according to Claim 3 or 4, **characterized in that** said dashboard (25) comprises a covering element (65) selectively movable between:
- a first position, in which it covers said compartment (70); and
- a second position, in which it leaves said compartment (70) open, so as to place said projection unit (32) in a position facing said second region (26).

6. The motor vehicle according to any one of the preceding Claims, **characterized in that** said head-up display (30) further comprises a processing unit (31) programmed to control said projection unit (32).

7. The motor vehicle according to Claim 6, **characterized in that** it comprises detection means (50) configured to acquire a signal representative of the surroundings of said motor vehicle (1);
said processing unit (32) being operatively connected to said detection means (50).

8. The motor vehicle according to Claim 7, **characterized in that** said processing unit (32) is programmed, in case of urban or suburban use, to cause said projector (32) to form a second virtual image (51) associated with said signal on said first region (19).

9. The motor vehicle according to any one of the Claims from 6 to 8, **characterized in that** said processing unit (32) is programmed, in case of racing use on a track, to cause said projector (32) to form a third virtual image (52) with a further item of information associated with the course of a competition and/or simulating, in use, a copilot.

10. The motor vehicle according to Claim 9, **characterized in that** said head-up display (30) is further configured to form said third image (52) on said first region (19).

## Patentansprüche

1. Kraftfahrzeug (1), umfassend:
- einen Fahrgastraum (3);
- ein Armaturenbrett (25), das innerhalb des Fahrgastraums (3) angeordnet ist und den Fahrgastraum (3) in Bezug auf eine normale Vorwärtsfahrrichtung des Kraftfahrzeugs (1) nach vorne begrenzt;
- eine Windschutzscheibe (5), die den Fahrgastraum (3) begrenzt und an das Armaturenbrett (25) angrenzt; und
- ein Head-up-Display (30), das ausgelegt ist, um mindestens ein erstes virtuelles Bild (29, 51, 52), das eine für das Fahren des Kraftfahrzeugs (1) relevante Information enthält, in einem ersten Bereich (19) zu erzeugen;
wobei das Head-up-Display (30) eine Projektionseinheit (32) umfasst, die in einem zweiten Bereich (26) des Armaturenbretts (25) untergebracht ist;
**dadurch gekennzeichnet, dass** der erste Bereich (19) durch die Windschutzscheibe (5) definiert ist;
wobei das Head-up-Display (30) das erste virtuelle Bild (29, 51, 52) auf dem ersten Bereich (19) der Windschutzscheibe (5) erzeugt; wobei sich das erste virtuelle Bild (29, 51) in Nullabstand von der Windschutzscheibe (5) befindet

2. Kraftfahrzeug nach Anspruch 1, **dadurch gekennzeichnet, dass** das Head-up-Display (30) ferner eine auf die Projektionseinheit (32) aufgebrachte Polarisationsfolie (60) umfasst.

3. Kraftfahrzeug nach Anspruch 1 oder 2, **dadurch gekennzeichnet, dass** der zweite Bereich (26) einen Raum (70) des Armaturenbretts (25) definiert.

4. Kraftfahrzeug nach Anspruch 3, **dadurch gekennzeichnet, dass** der Fahrgastraum (3) eine Vielzahl von voneinander beabstandeten Säulen (14, 15) umfasst, zwischen denen sich die Windschutzscheibe (5) erstreckt;
wobei die Windschutzscheibe (5) ihrerseits umfasst:
- eine mittlere Fläche (42), die den ersten Bereich (19) definiert und dem Projektor (32) zugewandt sein kann; und
- eine erste und eine zweite Endfläche (41a, 41b), die einander gegenüberliegen und durch jeweilige Segmente von entsprechenden Säulen (14, 15) begrenzt sind;
wobei einer (11) der Sitze (11, 12) einen Fahrersitz definiert, der auf der Seite der ersten Fläche (41a) angeordnet ist.

5. Kraftfahrzeug nach Anspruch 3 oder 4, **dadurch gekennzeichnet, dass** das Armaturenbrett (25) ein Abdeckelement (65) umfasst, das wahlweise zwischen folgenden Positionen bewegbar ist:
- einer ersten Position, in der es den Raum (70) abdeckt; und
- einer zweiten Position, in der es den Raum (70) offen lässt, um die Projektionseinheit (32) in eine dem zweiten Bereich (26) zugewandte Position zu bringen.

6. Kraftfahrzeug nach einem der vorhergehenden Ansprüche, **dadurch gekennzeichnet, dass** das Head-up-Display (30) ferner eine Verarbeitungseinheit (31) umfasst, die programmiert ist, um die Projektionseinheit (32) zu steuern.

7. Kraftfahrzeug nach Anspruch 6, **dadurch gekennzeichnet, dass** es Detektionsmittel (50) umfasst, die ausgelegt sind, um ein Signal zu erfassen, das für die Umgebung des Kraftfahrzeugs (1) repräsentativ ist;
wobei die Verarbeitungseinheit (32) betriebswirksam mit den Detektionsmitteln (50) verbunden ist.

8. Kraftfahrzeug nach Anspruch 7, **dadurch gekennzeichnet, dass** die Verarbeitungseinheit (32) so programmiert ist, dass sie im Falle einer Nutzung im Stadt- oder Vorortbereich bewirkt, dass der Projektor (32) ein zweites virtuelles Bild (51), das mit dem Signal assoziiert ist, auf dem ersten Bereich (19) erzeugt.

9. Kraftfahrzeug nach einem der Ansprüche 6 bis 8, **dadurch gekennzeichnet, dass** die Verarbeitungseinheit (32) so programmiert ist, dass sie im Falle eines Renneinsatzes auf einer Rennstrecke bewirkt, dass der Projektor (32) ein drittes virtuelles Bild (52) erzeugt, das eine weitere Information enthält, die mit dem Verlauf eines Wettbewerbs in Zusammenhang steht und/oder im Einsatz einen Beifahrer simuliert.

10. Kraftfahrzeug nach Anspruch 9, **dadurch gekennzeichnet, dass** das Head-up-Display (30) ferner dazu ausgelegt ist, das dritte Bild (52) auf dem ersten Bereich (19) zu erzeugen.

## Revendications

1. Véhicule automobile (1) comprenant :
- un habitacle (3) ;
- un tableau de bord (25) disposé à l'intérieur dudit habitacle (3) et délimitant ledit habitacle (3) à l'avant par rapport à une direction normale de déplacement vers l'avant dudit véhicule automobile (1) ;
- un pare-brise (5) délimitant ledit habitacle (3) et contigu audit tableau de bord (25) ; et
- un affichage tête haute (30) configuré pour former au moins une première image virtuelle (29, 51, 52) contenant une information accessoire à la conduite dudit véhicule automobile (1) sur une première région (19) ;
ledit affichage tête haute (30) comprenant une unité de projection (32) logée dans une seconde région (26) dudit tableau de bord (25) ;
**caractérisé en ce que** ladite première région (19) est définie par ledit pare-brise (5) ;
ledit affichage tête haute (30) formant ladite première image virtuelle (29, 51, 52) sur ladite première région (19) dudit pare-brise (5) ; ladite première image virtuelle (29, 51) étant située à une distance nulle dudit pare-brise (5)

2. Véhicule automobile selon la revendication 1, **caractérisé en ce que** ledit affichage tête haute (30) comprend en outre un film polarisé (60) appliqué sur ladite unité de projection (32).

3. Véhicule automobile selon la revendication 1 ou 2, **caractérisé en ce que** ladite seconde région (26) définit un compartiment (70) dudit tableau de bord (25).

4. Véhicule automobile selon la revendication 3, **caractérisé en ce que** ledit habitacle (3) comprend une pluralité de montants (14, 15) espacés les uns des autres, entre lesquels s'étend ledit pare-brise (5) ;
ledit pare-brise (5) comprenant, à son tour :
- une zone centrale (42) définissant ladite première région (19) et pouvant faire face audit projecteur (32) ; et
- une première et une seconde zones d'extrémité (41a, 41b) opposées l'une à l'autre et délimitées par des segments respectifs des montants correspondants (14, 15) ;
l'un (11) desdits sièges (11, 12) définissant un siège conducteur disposé du côté de ladite première zone (41a).

5. Véhicule automobile selon la revendication 3 ou 4, **caractérisé en ce que** ledit tableau de bord (25) comprend un élément de recouvrement (65) mobile de manière sélective entre :
- une première position, dans laquelle il recouvre ledit compartiment (70) ; et
- une seconde position, dans laquelle il laisse ledit compartiment (70) ouvert, de manière à placer ladite unité de projection (32) dans une position faisant face à ladite seconde région (26).

6. Véhicule automobile selon l'une quelconque des revendications précédentes, **caractérisé en ce que** ledit affichage tête haute (30) comprend en outre une unité de traitement (31) programmée pour commander ladite unité de projection (32).

7. Véhicule automobile selon la revendication 6, **caractérisé en ce qu'**il comprend des moyens de détection (50) configurés pour acquérir un signal représentatif de l'environnement dudit véhicule automobile (1) ;
ladite unité de traitement (32) étant reliée de manière opérationnelle auxdits moyens de détection (50).

8. Véhicule automobile selon la revendication 7, **caractérisé en ce que** ladite unité de traitement (32) est programmée, en cas d'utilisation urbaine ou périurbaine, pour amener ledit projecteur (32) à former une deuxième image virtuelle (51) associée audit signal sur ladite première région (19).

9. Véhicule automobile selon l'une quelconque des revendications 6 à 8, **caractérisé en ce que** ladite unité de traitement (32) est programmée, en cas d'utilisation en course sur circuit, pour amener ledit projecteur (32) à former une troisième image virtuelle (52) comportant une information supplémentaire associée au déroulement d'une compétition et/ou simulant, en utilisation, un copilote.

10. Véhicule automobile selon la revendication 9, **caractérisé en ce que** ledit affichage tête haute (30) est en outre configuré pour former ladite troisième image (52) sur ladite première région (19).
